# EUROPEAN PATENT APPLICATION

(11) **EP 0 830 991 A1**
(43) Date of publication of application: **25.03.1998**
(21) Application number: 97307310.9
(22) Date of filing: 19.09.1997
(51) Int. Cl.: B60R 21/22

(54) **Apparatus for protecting a vehicle occupant**

(30) Priority: 21.09.1996 GB 9619747
(71) Applicant: BREED AUTOMOTIVE TECHNOLOGY, INC., Lakeland, FL 33807-3050 (US)
(72) Inventor: Haidar, Raf, Leamington Spa, CV33 9RE (GB)
(74) Representative: Croston, David

(57) **Abstract**

An inflatable airbag (10) has two inflation chambers (16,18) communicating with one another via a passageway (20). A source of inflation gas (22) provides inflation gas only into one of the inflation chambers. When the airbag is deployed one of the inflation chambers (16) is completely inflated before the other inflation chamber (18) is completely inflated. The apparatus has special utility in the event a vehicle experiences a side impact or rollover.

## Description

The present invention relates generally to an inflatable apparatus for protecting a vehicle occupant, and more specifically to an airbag for protecting a vehicle occupant in the event that the vehicle is involved in a side impact type of collision.

In the event that a vehicle is involved in a collision where it is struck from the side there is very little time from the sensing of a side impact until a vehicle occupant may collide with a door or side window of a vehicle. It is common for a vehicle occupant to be secured by a lap belt and shoulder harness, or a belt device which is a composite lap belt and shoulder harness. With respect to persons in the front seat(s) of a vehicle the shoulder harness is often anchored above the vehicle occupant's shoulder on a pillar located at the rear edge of the front door of the vehicle. The deployment of an airbag into a space between a vehicle seat and a vehicle door, to provide a cushioning effect to a vehicle occupant's thorax and head without interference from a shoulder harness anchored to a structural pillar in such a manner presents a challenge. The protective apparatus disclosed herein meets and overcomes this challenge.

The airbag employed in the practice of the present invention has two inflation chambers which are connected by an open passageway. Inflation gas is introduced directly into only one of the inflation chambers. The lower inflation chamber, into which the inflation gas is introduced and is fully inflated before the upper inflation chamber is fully inflated, will be struck first by the body of the sideways moving vehicle occupant, causing inflation gas to move into the upper inflation chamber as the lower inflation chamber cushions the impact of the body with the vehicle interior. The vehicle occupant's head then strikes the fully inflated upper inflation chamber and the impact of the head with the vehicle interior is cushioned.

There is provided in accordance with one aspect of the present invention an apparatus for protecting a vehicle occupant comprising:
(a) an inflatable airbag having a first inflation chamber which has a first volume and a second inflation chamber having a second volume which is less than said first volume, said first and second chambers communicating with one another via a passageway; and
(b) a source of inflation gas which provides inflation gas only into said first inflation chamber, the source of inflation gas provides inflation gas initially into the first inflation chamber only, and the second inflation chamber is inflated using gas from the first inflation chamber, an exterior surface of the first inflation chamber is connected to an exterior surface of the second inflation chamber by a flexible web.

There is provided in accordance with another aspect of the present invention a vehicle seat having such an apparatus incorporated therein, preferably in the backrest and deployable through a lateral side of the backrest.

There is provided in accordance with yet another aspect of the invention an apparatus for protecting a vehicle occupant comprising an airbag which is deployed through a lateral side of a seat backrest such that the airbag is not interfered with by a shoulder harness anchored on a pillar even though the airbag when deployed is horizontally aligned with the shoulder harness and located both above and below the shoulder harness.

The features of the invention which are believed to be novel are set forth with particularity in the appended claims. The present invention, both as to its structure and manner of operation, may best be understood by referring to the following detailed description, taken in accordance with the accompanying drawings in which:
Fig. 1 is a schematic representation of a side view of an airbag which is employed in an apparatus for protecting a vehicle occupant in accordance with one embodiment of the present invention;
Fig. 2 is a schematic representation of a side view of an airbag which is employed in an apparatus for protecting a vehicle occupant in accordance with another embodiment of the present invention;
Fig. 3 is a schematic view of a first step in folding a airbag for use in a preferred embodiment of an apparatus for protecting a vehicle occupant in accordance with the present invention;
Fig. 4 is a schematic view of a second step in folding a airbag for use in a preferred embodiment of an apparatus for protecting a vehicle occupant in accordance with the present invention;
Fig. 5 is a schematic representation of the step of securing the folded airbag in the folded configuration by placing the folded airbag in a container;
Fig. 6 is a schematic representation of the step of securing the folded airbag in the folded configuration by placing a frangible band or wrap around the folded airbag;
Fig. 7 is a schematic representation of the step of securing the folded airbag in the folded configuration by placing a frangible band or wrap around the folded airbag and thereafter placing the airbag in a container;
Fig. 8 is a schematic representation of the step of securing the folded airbag in the folded configuration by placing the airbag in a container and thereafter placing a frangible band or wrap around the folded airbag and container;
Fig. 9 is a schematic representation of top view of a vehicle seat having an airbag situated in the backrest;
Fig. 10 is a schematic side elevation view of a vehicle seat with an airbag in a first stage of deployment from the backrest;
Fig. 11 is a schematic side elevation view of a vehicle seat with an airbag in a second stage of deployment from the backrest; and,
Fig. 12 is a schematic side elevation view of a vehicle seat with an airbag in a third stage of deployment from the backrest.

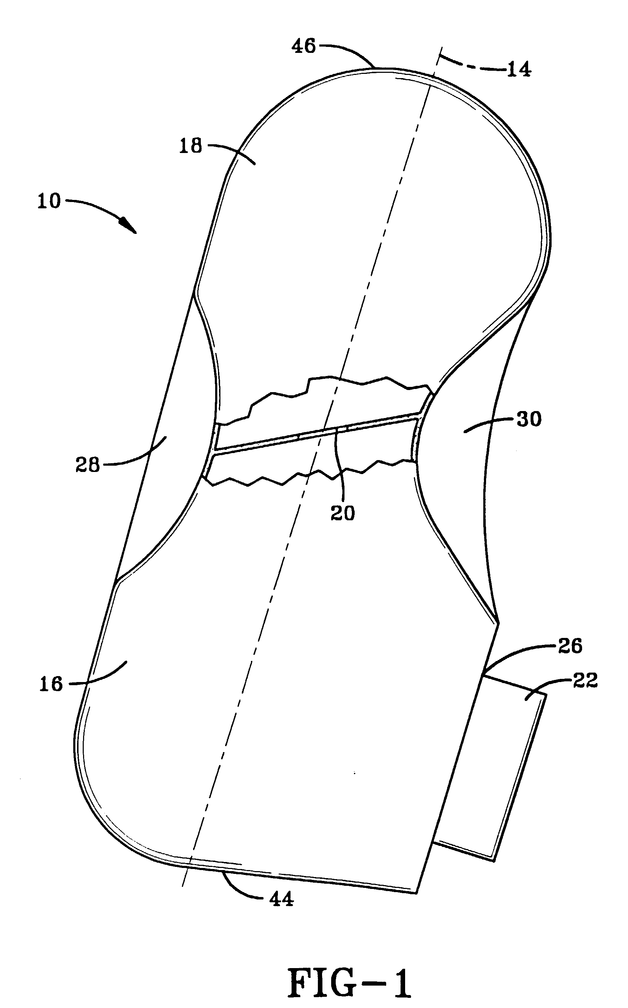

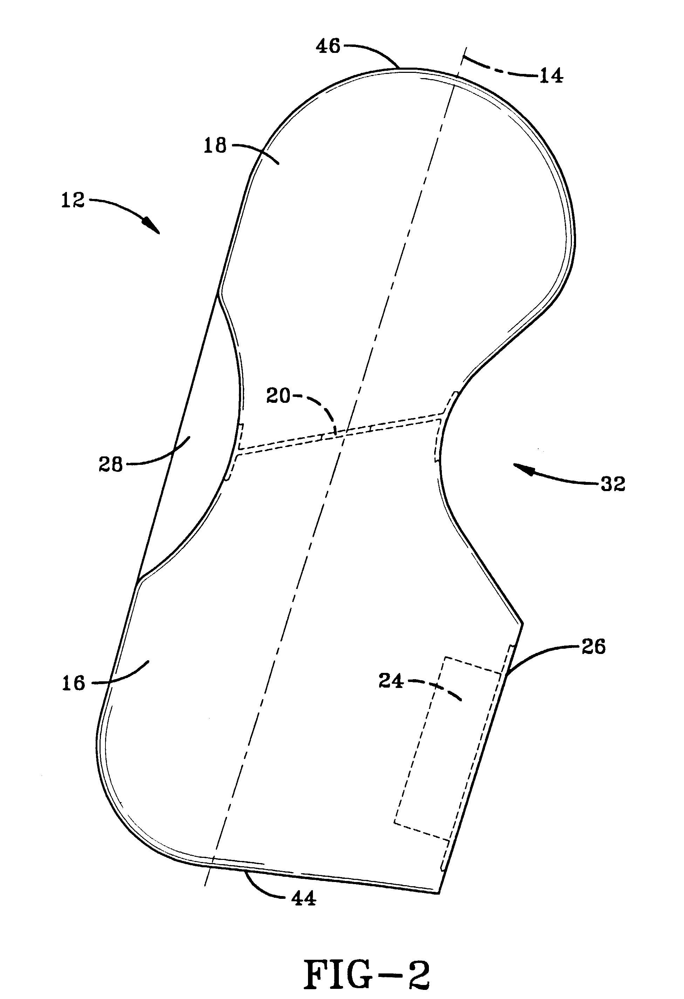

Referring first to Figs. 1 and 2 there are shown schematic side elevation views of alternative embodiments of airbags 10,12 used in the practice of the present invention in a flat, unfolded and uninflated state. Like parts in the embodiments will be identified with the same reference numeral. In each of the exemplary embodiments the airbag which has a longitudinal axis 14, the maximum length of the airbag measured parallel to said longitudinal axis being greater than the maximum width of the airbag measured perpendicular to said longitudinal axis. In each of the exemplary embodiments the inflatable airbag has a first inflation chamber 16 with a first volume and a second inflation chamber 18 with a second volume. The volume of the second inflation chamber 18 is less than the volume of the first inflation chamber 16. Preferably the ratio of the volume of the first inflation chamber to the volume of the second inflation chamber is in the range of about ten to six to about twelve to eight. A prototype airbag having this structure has been made in which the volume of the first inflation chamber 16 is about ten litres and the volume of the second inflation chamber 18 is about seven litres. The two inflation chambers communicate with one another via an open passageway 20. In the prototype airbag the open passageway 20 between the two inflation chambers had a diameter of about thirty millimetres. However, the time delay between the complete inflation of the first inflation chamber and the complete inflation of the second inflation chamber may be changed by changing the size of the open passageway between the two inflation chambers.

The airbag may be made of any suitable woven material such as a nylon fabric, or any suitable nonwoven film selected in accordance with good engineering practices. For example, a prototype airbag of the exemplary embodiments of Fig. 2 has been manufactured simply by sewing two layers of woven nylon fabric into the structure disclosed herein.

A source of inflation gas 22,24 provides inflation gas only into the first inflation chamber 16
such that the first inflation chamber is completely inflated before the second inflation chamber is completely inflated. Most preferably the volume of the inflation gas provided by the source of inflation gas is a third volume, which is less than the sum of the volumes of the first and second inflation chambers. Put another way, preferably the volume of the inflation gas provided by the source of inflation gas is a third volume with the sum of the first and second volumes being greater than the third volume, and most preferably the volume of inflation gas provided to the airbag is greater than the volume of the first, or larger, inflation chamber. For example, the prototype airbag referred to above was provided with only about twelve to fifteen litres of inflation gas while the sum of the volumes of the two inflation chambers was about seventeen litres.

The source of inflation gas may be any suitable airbag inflator, of which many are well known in the airbag art. The source of inflation gas may be a pyrotechnic inflator, a stored gas inflator or a hybrid of the these types of inflators. The airbag has an inflation gas receiving section 26 for receiving gas directly only into one of the inflation chambers. In the airbag shown in Fig. 1 the source of inflation gas 22 is located totally exterior of the airbag, while the airbag shown in Fig. 2 has the source of inflation gas 24 located at least partially on the interior of the airbag. The choice of location and type of the source of inflation gas should be made by an engineer based upon several factors including the space available for installing the safety device in a vehicle, the temperature of any chemical reaction which creates the inflation gas, the airbag material employed and so forth.

Although one skilled in the art of airbag design will readily recognize that the shapes of the first and second inflation chambers, and the size of the passageway therebetween, may vary while functioning in the intended manner disclosed herein, the preferred embodiments shown in Figs. 1 and 2 have an exterior surface of the first inflation chamber 16 connected to an exterior surface of the second inflation chamber 18 by a flexible web 28 to provide stability to the inflated airbag. The flexible web may comprise the same material as the inflation chambers, or any other suitable material. If the airbag will be deployed in a location where it will not potentially be interfered with by a shoulder harness, a second flexible web 30 may connect the exterior surfaces of the first and second inflation chambers at a side of the airbag opposite the first flexible web 28, as illustrated in Fig. 1. However, if the airbag will be deployed in a location where it will potentially be interfered with by a shoulder harness at a side of the airbag opposite the flexible web 28 the exterior surfaces of said first and second inflation chambers 16,18 are separated from one another by a void 32 as shown in Fig. 2.

In a preferred embodiment of the present invention the airbag is folded into a configuration for storage and eventual deployment by first arranging the airbag in a flat unfolded condition as shown in Figs. 1 and 2.

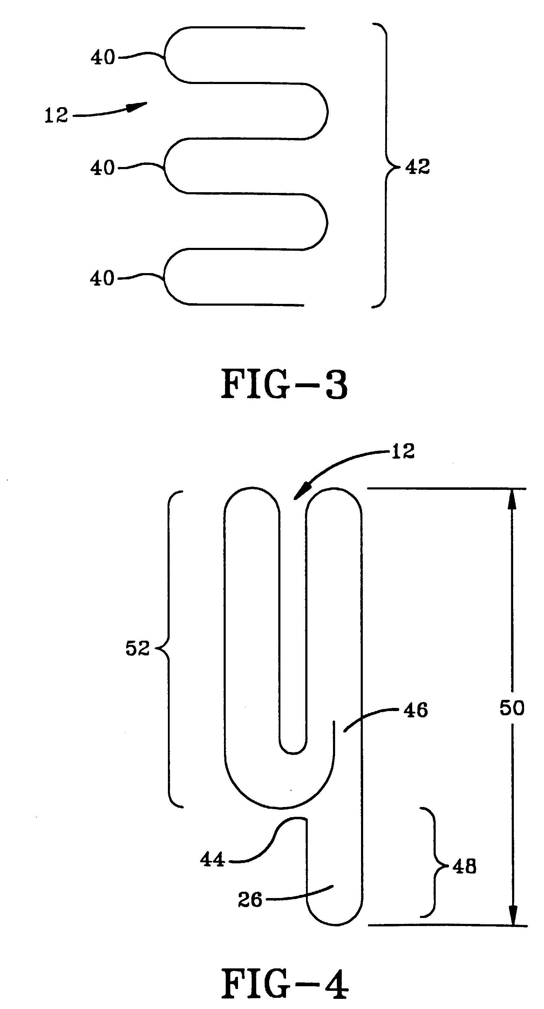

Referring next to Fig. 3 in conjunction with Figs. 1 and 2(b) the airbag is folded into a plurality of juxtaposed accordion pleats 40 which extend substantially parallel to the longitudinal axis 14 of the airbag. Fig. 3 is a schematic representation of an end or cross-sectional view of the juxtaposed accordion pleats 40 resulting from this step, which is referred to herein and in the claims as one layer 42 of accordion pleats. The product of this step has a first end 44 and a second end 46 which are best seen in Fig. 4 which is a schematic view of a side elevation view of the completely folded airbag. These first and second ends correspond to the lower 44 and upper 46 ends of the airbag as shown in Figs. 1 and 2.

Next the airbag is folded back upon itself from the first end 44 to form a first portion 48 of a final folded length 50 of the airbag. The first portion of the final folded length of the airbag has only two layers of accordion pleats and has a length comprising less than one half of the final folded length of the airbag. The inflation gas receiving section 26 of the airbag is located in the first portion of the final folded length of the airbag.

Next the airbag back is folded back upon itself from the second end 46 to form a second portion 52 of a final folded length 50 of the airbag. The second portion of the final folded length of the airbag has at least four layers of accordion pleats with the second end 46 of the airbag tucked between two of said layers of accordion pleats. The first and second portions 48,52 of the final folded length of the airbag are in abutting and non overlapping relationship to one another.

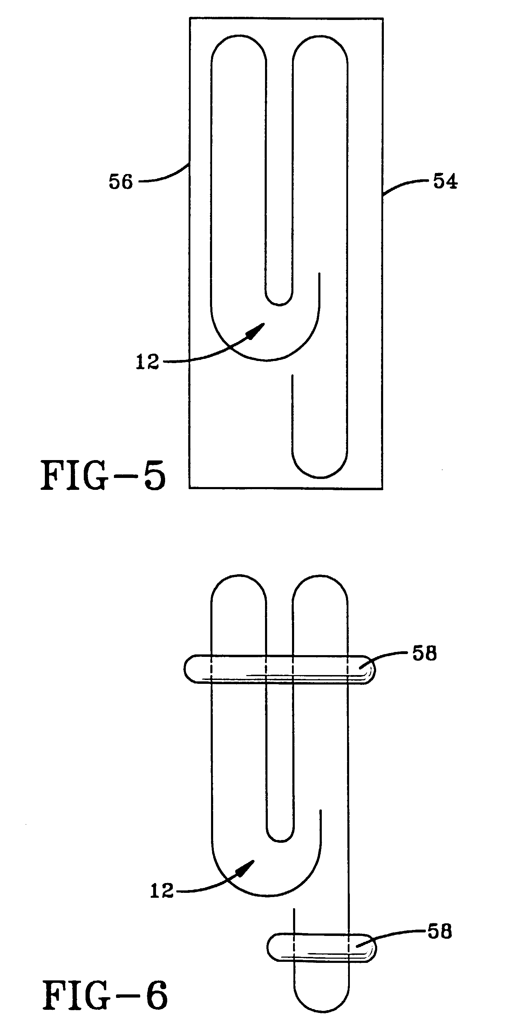

Preferably the folded airbag is maintained in the preferred configuration by any of several methods such as those shown in Figs. 5 through 8. Fig. 5 is a schematic representation of the step of securing the folded airbag 12 in the folded configuration by placing the folded airbag in a closed container 54. It should be noted that if a closed container is used for this purpose one side 56 of the closed container must be designed to break open during airbag deployment to allow the airbag to escape therefrom when it is being inflated.

Fig. 6 is a schematic representation of the step of securing the folded airbag 12 in the folded configuration by placing frangible bands 58 or a frangible wrap (not shown) around the folded airbag.

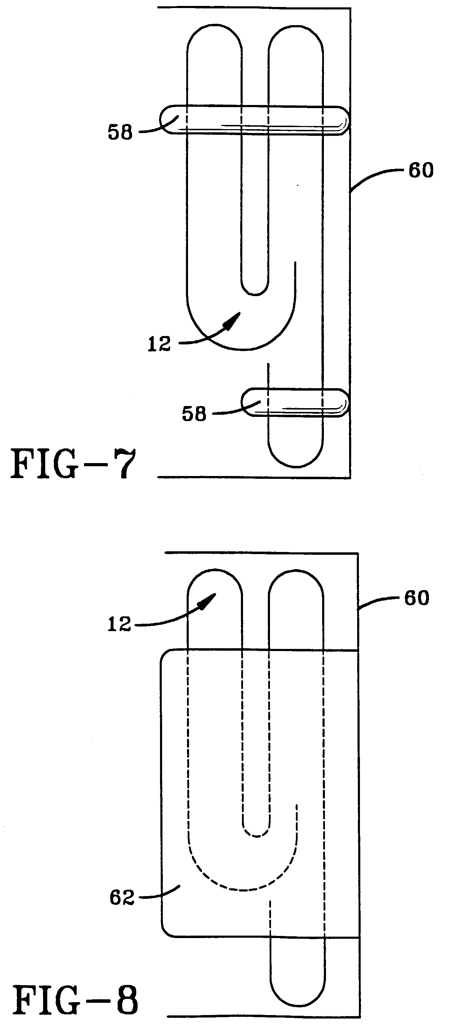

Fig. 7 is a schematic representation of the step of securing placing a frangible band 58 or wrap (not shown) around the folded airbag 12 and thereafter placing the airbag in an open container 60.

Fig. 8 is a schematic representation of the step of securing the folded airbag 12 in the folded configuration by placing the airbag 12 in an open container 60 and thereafter placing a frangible wrap 62 around the folded airbag and container.

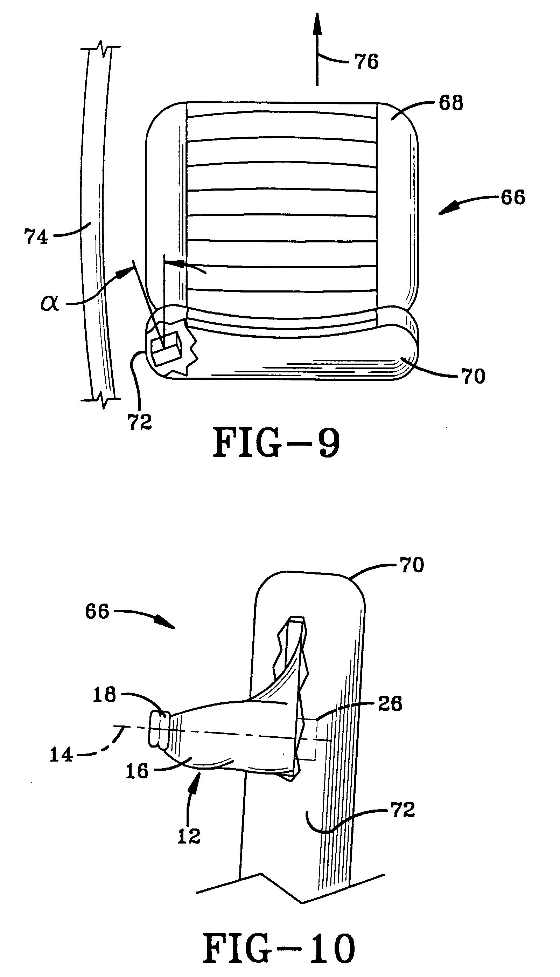

Referring next to Fig. 9 there is shown a schematic representation of top view of a vehicle seat 66. The vehicle seat has a seat cushion 68 and a backrest 70 with an apparatus for protecting a vehicle occupant, which as disclosed herein includes an airbag, being incorporated in the backrest and deployable through a lateral side 72 of the backrest. The vehicle seat 66 is in close proximity to a door 74 or other structural member of the vehicle interior. The airbag is incorporated into the backrest 70 such that when deployed it will exit the lateral side of the backrest at an angle a which is about 20° from the direction of travel of the vehicle as indicated by the arrow 76 in Fig. 9.

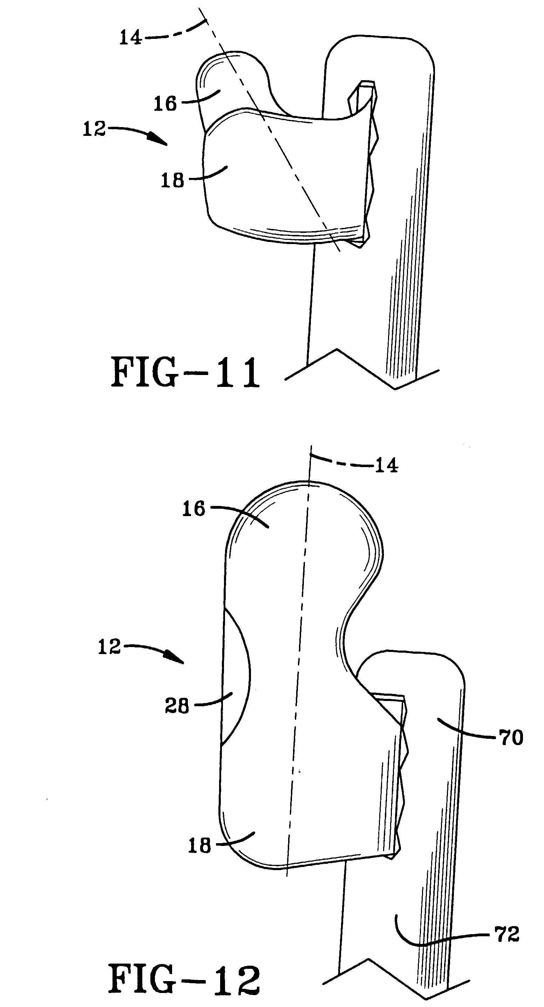

Fig. 10 is a schematic side elevation view of a vehicle seat 66 with an airbag during a first stage of airbag deployment. The source of inflation gas provides inflation gas only into the first inflation chamber 16 of the airbag when one or more sensors, not shown, sense the occurrence of a vehicle crash or rollover requiring deployment of the airbag. The inflation gas enters the first inflation chamber 16 which is located at the inflation gas receiving section 26 of the airbag which is located in the first portion of the final folded length of the airbag. The first inflation chamber 16 begins to inflate, the airbag breaks through the lateral side 72 of the backrest 70, and a substantial length of the longitudinal axis 14 of the airbag is disposed substantially perpendicular to the lateral side of the backrest. It should be noted that during this first stage of airbag deployment very little, or no, inflation gas is in the second inflation chamber 18.

Fig. 11 is a schematic side elevation view of a vehicle seat 66 during a second stage of airbag deployment. As more inflation gas enters the first inflation chamber 16 a substantial length of the longitudinal axis 14, especially the second portion of the final folded length of the airbag, which includes the smaller second inflation chamber 18, rotates towards the backrest 70.

Fig. 12 is a schematic side elevation view of a vehicle seat 66 during a third stage of airbag deployment. As inflation gas enters the second inflation chamber 18, possibly due in part to the impact of a vehicle occupant's torso with the first inflation chamber 16, a substantial length of the longitudinal axis 14 of the airbag is disposed substantially parallel to said lateral side 72 of the backrest 70 with the first inflation chamber 16 disposed vertically below said second inflation chamber 18. The flexible web 28 is disposed on a side of the airbag that is distal from said backrest 70. If the vehicle is equipped with a shoulder harness located where it will potentially interfere with an airbag located as shown in Fig. 12 at a side of the airbag opposite the flexible web 28 the exterior surfaces of said first and second inflation chambers 16,18 are separated from one another by a void 32 as shown in Fig. 2 to allow the airbag to fit around the shoulder harness as it rotates towards the seat back during the second and third stages of airbag deployment.

The deployment of an airbag into a space between a vehicle seat and a vehicle door, by the apparatus disclosed herein provides a cushioning effect to a vehicle occupant's thorax and head. The airbag employed in the present invention has two inflation chambers which are connected by an open passageway. Inflation gas is introduced directly into only one of the inflation chambers, with the first inflation chamber being completely inflated before the second inflation chamber is completely inflated. The lower inflation chamber, into which the inflation gas is introduced, will be struck first by the body of the sideways moving vehicle occupant, causing inflation gas to move into the upper inflation chamber as the lower inflation chamber cushions the impact of the body with the vehicle interior. The vehicle occupant's head then strikes the fully inflated upper inflation chamber and the impact of the head with the vehicle interior is cushioned. Furthermore, the invention disclosed herein cushions the vehicle occupant's thorax and head without interference from a shoulder harness anchored to a structural pillar of the vehicle.

The preferred embodiments have been described, hereinabove. It will be apparent to those skilled in the art that the above methods may incorporate changes and modifications without departing from the general scope of this invention. It is intended to include all such modifications and alterations in so far as they come within the scope of the appended claims.

## Claims

1. An apparatus for protecting a vehicle occupant comprising:
(a) an inflatable airbag having a first inflation chamber which has a first volume and a second inflation chamber having a second volume which is less than said first volume, said first and second chambers communicating with one another via a passageway; and
(b) a source of inflation gas which provides inflation gas only into said first inflation chamber, the source of inflation gas provides inflation gas initially into the first inflation chamber only, and the second inflation chamber is inflated using gas from the first inflation chamber, an exterior surface of the first inflation chamber is connected to an exterior surface of the second inflation chamber by a flexible web.

2. An apparatus for protecting a vehicle occupant according to Claim 1 wherein at a side of the airbag opposite said flexible web the exterior surfaces of said first and second inflation chambers are separated form one another by a void.

3. An apparatus for protecting a vehicle occupant according to Claim 1 wherein the ratio of said first volume to said second volume is in the range of about 10 to 6 to about 12 to 8.

4. An apparatus for protecting a vehicle occupant according to any of claims 1 through 3 wherein the volume of the inflation gas provided by the source of inflation gas being a third volume, the sum of said first and second volumes being greater than said third volume.

5. An apparatus for protecting a vehicle occupant according to claim 4 wherein said third volume is greater than said first volume.

6. An apparatus for protecting a vehicle occupant according to any of claims 1 through 5 further comprising a vehicle seat having seat cushion and a backrest, said airbag being incorporated in said backrest and deployable through lateral side of the backrest.

7. An apparatus for protecting a vehicle occupant according to claim 6 wherein the airbag has a longitudinal axis extending through said first and second chamber and:
(i) during a first stage of airbag deployment a substantial length of the longitudinal axis of the airbag is disposed substantially perpendicular to said lateral side of the backrest;
(ii) during a second stage of airbag deployment a substantial length of the longitudinal axis of the airbag rotates towards the backrest; and
(iii) during a third stage of airbag deployment a substantial length of the longitudinal axis of the airbag is disposed substantially parallel to said lateral side of the backrest with said first inflation chamber disposed vertically below said second inflation chamber.

8. An apparatus for protecting a vehicle occupant according to claim 7 wherein the vehicle seat is incorporated into a vehicle with said lateral side of the backrest through which the airbag is deployable being proximal to the lateral side of the vehicle.
